Europäisches Patentamt

European Patent Office

Office européen des brevets

(11) Veröffentlichungsnummer: **0 222 104**
**A2**

## (12) EUROPÄISCHE PATENTANMELDUNG

(21) Anmeldenummer: 86112641.5

(22) Anmeldetag: 12.09.86

(51) Int. Cl.⁴: **B 29 C 53/40**
**B 29 C 63/42**

(30) Priorität: 17.09.85 CH 4015/85
28.08.86 CH 3483/86

(43) Veröffentlichungstag der Anmeldung:
20.05.87 Patentblatt 87/21

(84) Benannte Vertragsstaaten:
AT BE CH DE FR GB IT LI LU NL SE

(71) Anmelder: FOLIEN FISCHER AG
Bahnhofstrasse 133
CH-5605 Dottikon(CH)

(72) Erfinder: Fischer, Jules
Neumattweg 6
CH-8967 Widen(CH)

(74) Vertreter: Fiedler, Otto Karl, Dipl.-Ing.
Patentanwalt Hug Interlizenz AG Austrasse 44 Postfach
CH-8045 Zürich(CH)

(54) **Verfahren und Einrichtung zur Herstellung von Folienhülsen.**

(57) Vorrichtung ist mit einer Fördereinrichtung (24) für den Transport des Körpers (25) auf einer Transportebene versehen. Um im Rahmen der Schrumpffähigkeit der Folie die Ummantelung unabhängig von der Produkteform zu machen, ist vorgesehen, dass zwei Greifer (19, 20) aufweisende Mittel vorhanden sind, welche mit den Greifern (19, 20) jeweils einen Folienabschnitt senkrecht zur Transportfläche und quer zur Förderrichtung halten. Die Greifer (19, 20) sind um eine zur Transportebene senkrechte Achse (15, 16) schwenkbar. Weiter ist eine Beleimvorrichtung vorhanden, um den Folienabschnitt (26) wenigstens an einem seiner Enden zu beleimen.

EP 0 222 104 A2

Croydon Printing Company Ltd.

Folien Fischer AG

## Verfahren und Einrichtung zur Herstellung von Folienhülsen

Die Erfindung betrifft ein Verfahren zur Herstellung von Folienhülsen, insbesondere unter Wärmewirkung schrumpfungsfähigen Folien, für die Ummantelung von Flaschen, Büchsen und dergl. oder von Gruppen solcher Gegenstände. Die Erfindung betrifft ferner eine Einrichtung zur Durchführung eines solchen Verfahrens.

Ein Verfahren dieser Art und eine Einrichtung zu seiner Durchführung ist bekannt aus der DE-AS 21 57 940. Danach formt man eine Schlauchfolie bzw. Hülse und schiebt diese über den zu umhüllenden Gegenstand, d.h. ein entsprechendes Produkt der vorgenannten Art. Zum Anbringen der Schlauchfolie wird der Körper an seinem Kopfende durch einen Greifer gefasst, worauf die Folie über den Körper gestülpt und in eine Schrumpfkammer gebracht. Ein weiterer Nachteil dieser Vorrichtung besteht darin, dass für die Ummantelung hinsichtlich der Körperform enge Grenzen gesetzt sind und dass zum Beispiel der Körper keine stärkeren Einschnürungen in seiner Mantelfläche aufweisen darf. Ein weiterer Nachteil besteht darin, dass nicht mehr als ein Körper in eine einzige Ummantelung gebracht werden kann.

Bei einer anderen, aus der EP-OS 95 882 bekannten Umhüllungseinrichtung wird ein Folienmantel unmittelbar auf den zu
umhüllenden Gegenstand aufgewalzt. Diese Arbeitsweise und die
Herstellung der Verbindungsnaht im Folienmantel, wozu eine
Anlage der Kantenbereiche der Folie an der Gegenstandsoberfläche erforderlich ist, führen zu wesentlichen Beschränkungen hinsichtlich der für eine Umhüllung offenstehenden
Körperformen. Auch hier können ferner nicht mehrere Gegenstände in einer Umhüllung untergebracht werden, wie auch die
Herstellung von Leerhülsen nicht möglich ist.

Aufgabe der Erfindung ist demgegenüber die Schaffung eines
Verfahrens und einer entsprechenden Einrichtung, mit deren
Hilfe hülsenförmige Ummantelungen für Gegenstände, insbesondere für Flaschen, Büchsen und dergl., weitgehend unabhängig
von deren Form und Anzahl innerhalb einer Umhüllung hergestellt werden können. Die erfindungsgemässe Lösung dieser
Aufgabe ist hauptsächlich bestimmt durch die Merkmale des
Anspruchs 1 bzw. 12.

Durch diese Erfindungsmerkmale ergeben sich insbesondere
folgende Vorteile:

Infolge der Unabhängigkeit des Verfahrens nicht nur von der
Form, sondern sogar vom Vorhandensein des zu umhüllenden
Gegenstandes können insbesondere auch Leerhülsen mit einer vorgegebenen Umfangslänge für nachträgliches Aufsetzen auf die zugehörigen Gegenstände hergestellt werden.

Weiterhin erlaubt die freizügige Bemessung des Hülsenumfange sowohl einen straffen Sitz wie auch die Einhaltung einer vorgegebenen Spielbemessung zwischen Gegenstand und Hülse. Damit kann den Gegebenheiten der jeweils vorgesehenen Weiter verarbeitung, insbesondere bei Verwendung von Schrumpffolien mit bestimmtem Schrumpfvermögen, und auch des jeweiligen Endgebrauches optimal Rechnung getragen werden.

Das Verfahren ist zur gleichzeitigen Umhüllung eines Satzes von Gegenständen ("Multipack") geeignet. Andererseits kommt gerade für die Mehrfachumhüllung auch die Herstellung entsprechend bemessener Leerhülsen mit Vorteil in Betracht.

Ferner können mit dem erfindungsgemässen Verfahren ohne weiteres die Länge des zu umhüllenden Gegenstandes übertreffende wie auch unterschreitende Hülsen hergestellt werden. Ersteres ist z.B. für kantenumgreifende Schrumpfhüllen, letzteres u.a. für das Aufbringen von schmalen, bandartigen Hülsen bzw. Etikettbändern und dergl. von Bedeutung. Der Hülsenumfang kann dabei insbesondere komplizierteren Körperformen, etwa mit über die Körperlänge wechselndem Durchmesser, angepasst werden.

Ein besonderer Vorteil der erfindungsgemässen Einrichtung besteht darin, dass die Umstellung zur Erzeugung von Hülsen unterschiedlicher Abmessungen im allgemeinen sehr einfach und rasch durchführbar ist. Grundsätzlich genügt hierfür eine Justierung oder allenfalls ein Austausch von Greifern.

Die Erfindung wird weiter anhand der in den Zeichnungen schematisch dargestellten Ausführungsbeispiele erläutert. Hierin zeigt:

Fig. 1 ein erstes Ausführungsbeispiel einer erfindungsgemässen Einrichtung in Draufsicht,

Fig. 2 eine Frontansicht zu Fig. 1,

Fig. 3 verschiedene Arbeitsstellungen der Greifer bei der Herstellung einer Ummantelung,

Fig. 4 eine schematische Darstellung der Herstellung einer Ummantelung mit längsgereckter Folie und

Fig. 5 eine schematische Darstellung der Herstellung einer Ummantelung mit quergereckter Folie,

0222104

Fig. 6 ein zweites Ausführungsbeispiel mit abgewandelter Folienzuführung in schematisch vereinfachter Draufsicht,

Fig. 7 ein drittes Ausführungsbeispiel, ähnlich Fig. 6, jedoch mit abgewandelter Hülsenschliessvorrichtung, ebenfalls in schematisch vereinfachter Draufsicht,

Fig. 8 ein viertes Ausführungsbeispiel in Seitenansicht, mit Schwenk-Folienumsetzung zwischen Zuführ- und Arbeitsebene,

Fig. 9 eine Draufsicht der Einrichtung nach Fig. 8 in einem ersten Betriebszustand,

Fig.10 einen Schnitt der in einem zweiten Betriebszustand befindlichen Einrichtung gemäss Schnittebene X-X in Fig. 8,

Fig.11 ein fünftes Ausführungsbeispiel in Seitenansicht, ähnlich dem vorangehenden, jedoch mit abgewandelter Anordnung der Folienzuführung und -umsetzung,

Fig.12 ein sechstes Ausführungsbeispiel in schematisch vereinfachter Seitenansicht, mit vertikaler Linear-Folienumsetzung zwischen Zuführ- und Arbeitsebene,

Fig.13 ein siebtes Ausführungsbeispiel mit kombinierter Folienabzugs- und Hülsenschliessbewegung, dargestellt in schematisch vereinfachter Draufsicht, in einem ersten Betriebszustand und

Fig.14 die Einrichtung nach Fig.13 in einem zweiten Betriebszustand.

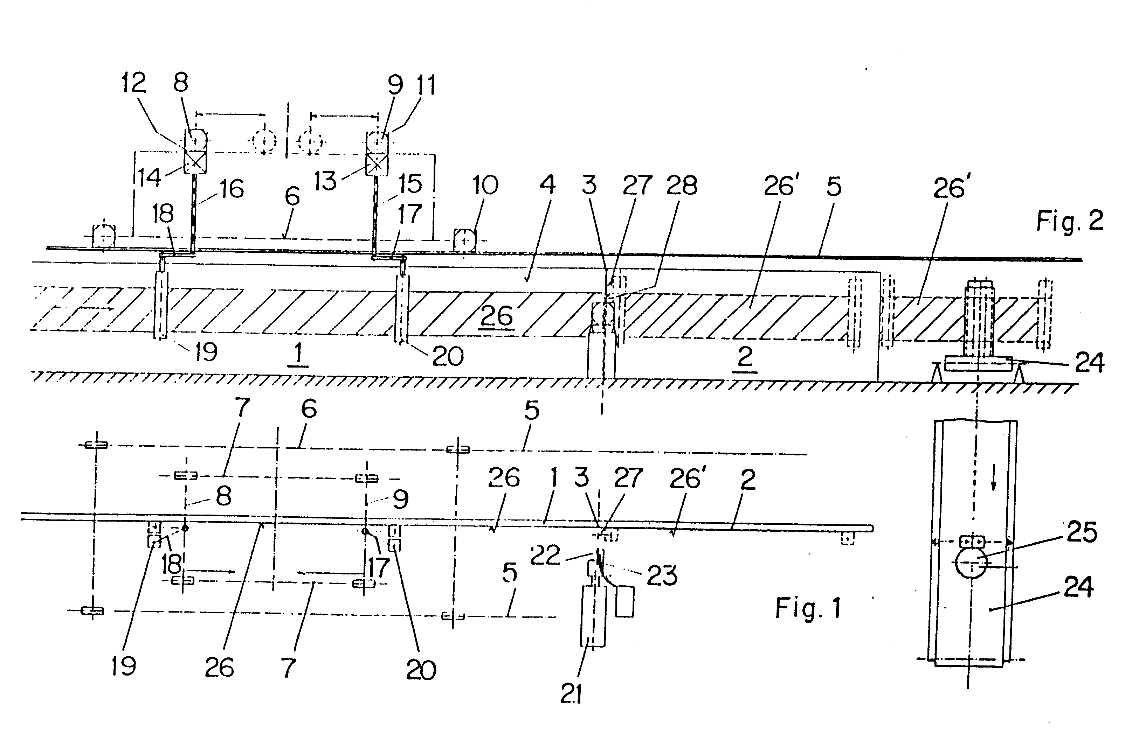

Die in Fig. 1 gezeigte Vorrichtung umfasst zwei aneiander grenzende, koplanare Führungsplatten 1 und 2 ,die eine Schneidnut 3 bilden. Die Führungsplatte 1 ist als Hohlkörper ausgebildet und ist weiter auf ihrer in Figur 2 mit der Hinweisziffer 4 bezeichneten Vorderseite durch ein Lochblech begrenzt. Das Innere der Führungsplatte 1 ist mit einer nicht dargestellten Vakuumquelle verbunden, welche durch ein ebenfalls nicht dargesteltes Ventil zu- und abschaltbar ist.

Parallel über den Führungsplatten 1 und 2 und längs diesen befinden sich zwei Schienen 5, auf denen ein Wagen 6 verfahrbar ist. Der Wagen 6 seinerseits trägt ein zu den Schienen 5 paralleleles Schienenpaar 7, auf denen zwei Katzen 8 und 9 einzeln verfahrbar sind. Der Wagen 6 sowie die Katzen 8 und 9 sind je mit einem Einzelantrieb 10, 11 bzw. 12 versehen. Die Katzen 8 und 9 tragen je einen Drehantrieb 13 bzw. 14, von denen je eine Schwenkwelle 15 bzw. 16 vertikal nach unten ragt. Am unteren Ende der Schwenkwellen 15 bzw. 16 sind mittels Winkelhebeln 17, 18 je ein stabförmiger Sauggreifer 19 bzw. 20 befestigt. Diese Greifer 19 und 20 sind je mit einem vertikalen, gegen die Führungsplatten 1 und 2 gerichteten Saugschlitz versehen.

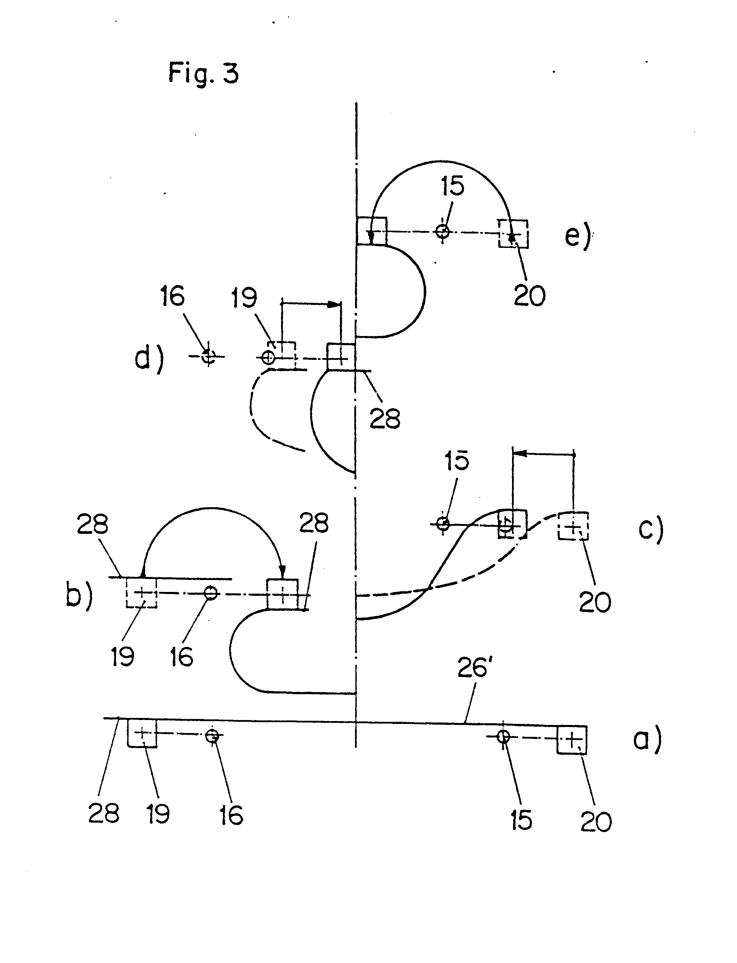

Der Schneidnut gegenüberliegend befindet sich eine Zylinderkolbeneinheit 21, welche ein Schneidmesser 22, ein Perforierwerkzeug sowie eine Beleimvorrichtung 23 zwischen einer hinteren (in Fig. 1 gezeigt) und einer vorderen Endlage bewegt, in welcher das Schneidmesser 22 in die Schneidnut 3 eingreift. Mit dem Perforierwerkzeug wird der Folienabschnitt an einem Ende perforiert, damit (siehe Fig. 3) der Greifer 20 bei der Schlaufenbildung durch den Endkantenbereich hindurch wirken und den anderen, vorstehenden Endkantenbereich 28 ansaugen kann. Am Ende der Führungsplatte 2 (in der Zeichnung rechts) verläuft quer dazu ein horizontales Förderband 24, mit dem die zu umhüllenden Gegenstände 25 durch einen nicht dargestellten Schrumpftunnel geführt werden.

Die beschriebene Vorrichtung arbeitet wie folgt: Die für die Umhüllung von Gegenständen 25 bestimmte Folie 26 wird für die Bereitstellung der Maschine von Hand von einer drehbar gelagerten Vorratsrolle abgezogen und mit der vorangehenden Kante bündig mit der Schneidnut 3 gegen die mit Unterdruck beaufschlagte Vorderseite 4 der Führungsplatte 1 gelegt, welche die Folie 26 in vertikaler Lage ansaugt und festhält, wie dies in Fig. 2 mit ausgezogenen Linien dargestellt ist. Die Greifer 19, 20 werden voneinander weggeschwenkt und die Katzen 8, 9 soweit auseinander gefahren, dass der Abstand der Greifer 19, 20 (bei paralleler Ausrichtung mit der Führungsplatte 1) knapp der Länge des abzutrennenden Folienabschnitts 26' entspricht. Danach wird der Wagen 6 gegen die Schneidnut 3 verschoben, wo die Greifer 19 und 20 bis zur Anlage gegen die Folie 26 geschwenkt werden. Dabei legt sich der Greifer 20 derart gegen die Folie 26, dass er mit deren freier Endkante bündig abschliesst. Anschliessend werden die Greifer 19, 20 mit Unterdruck beaufschlagt und das Innere der Führungsplatte 1 belüftet, so dass die Folie 26 nicht mehr an dieser haftet. Der Wagen 6 wird nun weiter um die Länge des Folienabschnitts 26' gegen das Förderband 24 verschoben und die Folie 26 nachgezogen, so dass sich das nachlaufende Ende des Folienabschnitts 26' über der Schneidnut 3 befindet. In dieser Stellung ist der Greifer 19 um die Strecke 27 von der Schneidnut 3 entfernt, so dass der Folienabschnitt 26' einen über den Greifer 19 vorstehenden Ueberfalz 28 bildet. Durch eine Betätigung der Zylinderkolbeneinheit 21 wird das Schneidmesser 22 in die Schneidnut 3 vorgefahren und der Folienabschnitt 26' abgetrennt. Gleichzeitig wird der Ueberfalz 28 beleimt und der vorausgehende, nun freie Endkantenbereich des nachfolgenden Folienabschnitts perforiert.
Der Wagen 6 fährt nun mit dem Folienabschnitt 26' über das
Förderband 24, bis die Greifer 19, 20 symetrisch neben dessen
vertikaler Längsmittelebene stehen (siehe Fig. 3a). Die
Höhenlage des Folienabschnitts 26' über dem Förder- band 24
hängt ab von der vorgesehenen Höhenlage der Ummante- lung in
Bezug auf den Gegenstand 25. Diese Höheneinstellung kann
durch ein vertikales Verschieben des Förderbandes zu oder
durch eine axiale Verschiebung der Schwenkwellen 15, 16
vorgenommen werden.

Der nächste auf dem Förderband 24 ankommende Gegenstand 25
wird von dem über das Förderband 24 gespannten Folienabschnitt 26' zurückgehalten, wobei das Förderband 24 unter
ihm weitergleitet oder angehalten wird. Mit einer Betätigung
des Drehantriebes 14 wird der Greifer 19 um 180° nach innen
verschwenkt, so dass der Ueberfalz 28 gegen den anderen
Greifer 20 gerichtet ist. Dadurch biegt sich der anfänglich
gestreckte Folienabschnitt 26' in Bewegungsrichtung des
Förderbandes 24 durch (siehe Fig. 3b). Anschliessend wird die
Katze 9 gegen die vertikale Längsmittelebene des Förderbandes
24 verfahren, so dass sich die durch den Folienabschnitt 26'
gebildete Schlaufe vergrössert (siehe Fig. 3c).

Nach dieser Zustellbewegung des Greifers 20 wird die Katze 8 gegen die vertikale Längsmittelebene des Förderbandes 24 verschoben, bis der Greifer 19 an diese angrenzt und der Ueberfalz 28 darüber hinausragt (siehe Fig. 3d). Seine Leimschicht weist nun von der Schlaufe weg nach aussen. Als nächstes wird der Drehantrieb 13 eingeschaltet und der Greifer 20 gegen den Greifer 19 verschwenkt. Damit wird das von ihm gehaltene Ende des Folienabschnitts 26' gegen den beleimten Ueberfalz 28 gedrückt. Durch die im Bereich der Saugwirkung des Greifers 20 befindliche Perforation des Folienabschnitts 26' hindurch wird nun der Ueberfalz 28 angesaugt, so dass die beiden Endkantenbereiche des Folienabschnitts bis zum Aushärten des Leims gegeneinander gehalten werden und sich verbinden können.

Anschliessend werden die Greifer 19 und 20 belüftet und der ummantelte Gegenstand 25 freigegeben. Letzteres wird sodann auf dem Transportband 24 weitertransportiert und durch einen Schrumpftunnel geführt. Der Wagen 6 kann jetzt zurückfahren und die Folie 26 erneut nachziehen, indem - wie beschrieben - der Greifer 20 den freien, mit der Schneidnut 3 bündig liegenden Endkantenbereich der Folie ergreift und der Greifer 19 unter Berücksichtigung der Ueberfalzlänge am zurückliegenden, noch nicht freigeschnittenen Endkantenbereich des erfassten Folienabschnitts angreift.

Im Bedarfsfall kann an beiden Endkantenbereichen eines
Folienabschnitts ein Ueberfalz vorgesehen und als Werbeflagge
oder dergl. ausgebildet werden.

Die beschriebene Einrichtung eignet sich für das Umhüllen von
Gegenständen mit längsgereckten Folien. Für das Umhüllen mit
quergereckten Folien ist die Folienvorratsrolle mit ihrer
Drehachse parallel zu den Schienen 5 und oberhalb der
Führungsplatte 1 anzuordnen, wobei die Folie nach unten
abgezogen wird. Die dabei dem Förderband näherliegende
Folienlängskante kann dabei bündig mit der (in diesem Fall
bedeutungslosen) Schneidnut 3 liegen, wobei die Folienbreite
auf den Umfang der zu umhüllenden Gegenstände abzustimmen
ist. Das Schneidmesser muss dann horizontal wirken und
jeweils den von oben nach unten abgezogenen Folienabschnitt
abtrennen. Die Beleimvorrichtung wirkt am gleichen Ort und in
gleicher Weise wie bei der Verarbeitung längsgereckter Folien.

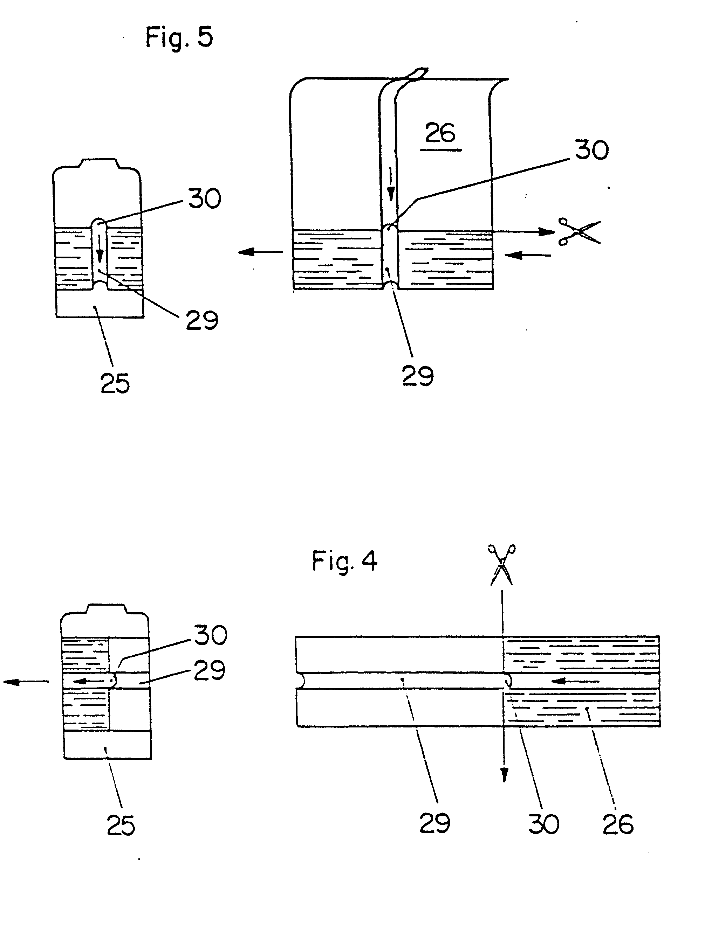

Die Figuren 4 bzw. 5 zeigen die Umhüllung mit einer längsgereckten bzw. einer quergereckten Folie. In beiden Fällen
ist es möglich, in der Umhüllung durch eine Parallelperforation der Folie ein Reissband und durch einen entsprechenden Schnitt einen Auftrennlappen 30 (Reissbandende)
auszubilden. Anstelle der Parallelperforation kann auch ein
Aufreissband als Verstärkung auf die Folie aufgeklebt bzw.
aufgesiegelt werden.

Ist der Gegenstand 25 z.B. eine mit einem Deckel verschlossene Dose, so kann die Umhüllung derart angebracht werden, dass sie unmittelbar nach dem Anbringen über einen Dosenrand vorsteht. Im Schrumpftunnel legt und spannt sich dieser vorstehende Folienrand über den Deckel und bildet damit eine Verschlusssicherung, da diese zuerst durch Ziehen am Reisslappen zu entfernen ist, bevor der Deckel abgehoben werden kann. Dies gilt insbesondere, wenn die Folie auf der dem Gegenstand zugewandten Seite mit einem wärmeaktivierbaren Klebstoff beschichtet ist.

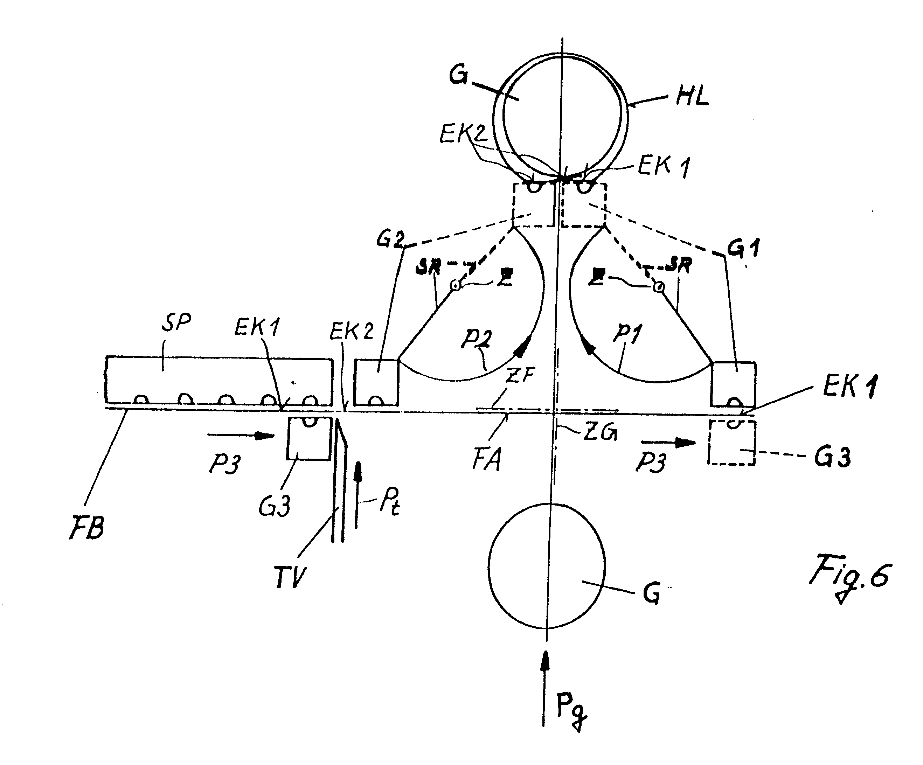

Die Umhüllungseinrichtung nach Fig. 6 umfasst eingangsseitig eine Folienbahn-Zuführvorrichtung, von der nur ihr Ausgangsbereich mit einer ein- und ausschaltbaren Saugplatte SP und längs dieser in Richtung von links kommend geführter Folienbahn FB angedeutet ist. Es folgt eine Folienabzugs- und Ablängvorrichtung mit einem (hier in seiner Längsrichtung gesehenen) stabförmigen Sauggreifer G3. Letzterer entspricht in seinem Aufbau den im vorangehenden Beispiel gezeigten Greifern und bedarf hier keiner erneuten Erläuterung.

Im Ausgangszustand wird der Endabschnitt der Folienbahn FB an der Saugplatte SP gehalten, wobei der rechtsseitige Endkantenbereich EK1 der Folie mit der rechten Endkante der Saugplatte bündig abschliesst. Entsprechendes gilt für den in seiner linken (in ausgezogenen Linien angedeuteten) Ausgangsstellung befindlichen Greifer G3. Nach Aktivierung des letzteren wird die Folienbahn von der Saugplatte freigegeben. Der Greifer G3 hat damit die Führung der Folienbahn übernommen und wird nun in Richtung der Pfeile P3 in seine rechte (strichliert angedeutete) Endstellung verschoben. Dabei erfolgt der Abzug eines dem Hülsenumfang zuzüglich einer Ueberfalzlänge entsprechenden Folienabschnitts FA längs der Zuführbahn ZF. Danach werden zwei an der gegenüberliegenden Oberfläche des Folienabschnitts FA angreifende Sauggreifer G1 und G2 aktiviert sowie der Greifer G3 inaktiviert. Während der Folienabschnitt von den zunächst in ihrer (in durchgehenden Linien angedeuteten) Ausgangslage verharrenden Greifern G1, G2 gehalten wird, legt eine gemäss Pfeil Pt vorrückende Trennvorrichtung TV den rückwärtigen Endkantenbereich EK2 mit einem zur rechten Endfläche der Saugplatte SP bündigen Schnitt frei. Nach Rückzug der Trennvorrichtung TV kehrt der Greifer G3 in seine Ausgangsstellung zurück.

Anschliessend rückt ein durch eine (nicht näher dargestellte) Transportvorrichtung angetriebener, zu umhüllender Gegenstand G längs einer Zuführbahn ZG gegen den Mittelbereich des Folienabschnitts FA vor. Gleichzeitig beginnen die an Schwenkarmen SR um zur Folienebene parallele Achsen Z
gelagerten Greifer G1 und G2 eine halbkreisförmige Schlaufenbildungs- und Hülsenschliessbewegung gemäss Pfeilen P1 bzw.
P2. Unter andauernder Transportbewegung gemäss Pfeil Pg rückt
der Gegenstand G in die sich bildende Schlaufe des Folienabschnitts FA ein. Wenn die Greifer G1, G2 die Endstellung
ihrer Schliessbewegung erreicht haben (strichliert angedeutet), ist eine den Gegenstand G umschliessende Hülse HL
gebildet. Die Schliessbewegung des Greifers G1 erhält dabei
gegenüber derjenigen des Greifers G2 eine solche Nacheilung,
dass der Endkantenbereich EK2 mit seinem tangential zum
Hülsenumfang nach rechts vorstehenden Ueberfalz bereits am
Gegenstand anliegt, wenn der Endkantenbereich EK1 durch den
Greifer G1 in seine Anlagestellung einrückt. dadurch ergibt
sich die gewünschte Ueberlappung der Endkantenbereiche sowie
eine kollisionsfreie Schliessbewegung der beiden Greifer.

Die Bildung einer stoffschlüssigen Verbindung zwischen den
sich überlappenden Endkantenbereichen des Folienabschnitts
kann grundsätzlich in der zum vorangehenden Ausführungsbeispiel erläuterten Weise mittels Beleimung erfolgen. Bei
zahlreichen kommerziell verwendeten Folienmaterialien genügt
jedoch ein Anlösen einer der beiden miteinander zu verbindenden Folienoberflächen mit einem geeigneten Lösungsmittel,
gefolgt von einer leichten Druckberührung der Verbindungsflächen, um eine zuverlässige Naht herzustellen. Dabei hat sich ferner gezeigt, dass die sich ohnehin einstellende Adhäsion zwischen den Verbindungsflächen für die notwendige Druckberührung voll ausreicht, so dass eine Unterstützung durch Saugwirkung und eine Perforation der vorerwähnten Art nicht erforderlich sind. Die Befeuchtung mit Lösungsmittel kann mit Hilfe einfacher, poröser Elemente in an sich üblicher Weise vorgenommen werden. Im übrigen kommt im Falle thermoplastischen Folienmaterials auch eine Nahtbildung mittels elektrothermisch oder mit Ultraschall arbeitender Schweissvorrichtungen an sich üblicher Art mit dem Vorteil einfacheren Vorrichtungsaufbaues und höherer Arbeitsgeschwindigkeit in Betracht.

Im Vergleich zu dem vorangehenden Ausführungsbeispiel bietet die vorliegende Folienabzugsvorrichtung mit nur einem bewegten Abzugsgreifer in Verbindung mit einer - abgesehen von der Bewegung der Schliessgreifer - ruhenden Schliessvorrichtung erhebliche Vorteile hinsichtlich Einfachheit der Gesamtkonstruktion und Betriebssicherheit sowie Lebensdauer. Gemeinsam ist den beiden bisher beschriebenen Ausführungen die vorteilhaft einfache, weil direkte Uebergabe des hülsenbildenden Folienabschnitts von der Abzugsvorrichtung zur Hülsenschliessvorrichtung. Massgeblich hierfür ist die Anordnung der wenigstens annähernd in einer Ebene liegenden bzw. sich schneidenden Zuführbahnen ZF und ZG.

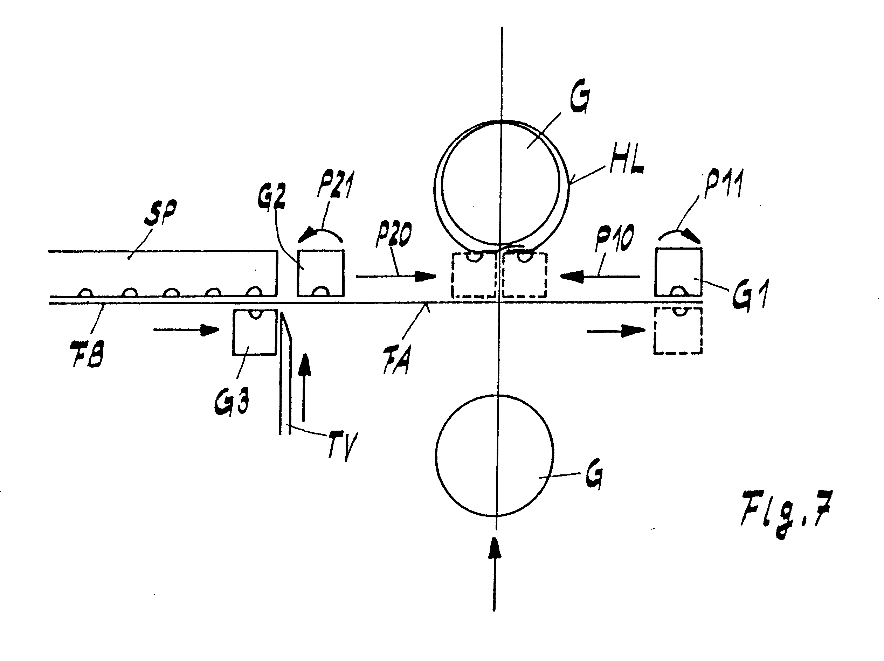

Die Ausführung nach Fig. 7 wie auch die nachfolgenden Ausführungen entsprechen hinsichtlich der Folienbahnzuführung, des Folienabzugs und der Gegenstandszuführung sowie hinsichtlich der Verwendung zweier - abgesehen von der eigentlichen Hülsenschliessbewegung - ruhender Schliessgreifer dem Beispiel nach Fig. 6. Die einander entsprechenden Elemente sind daher im folgenden mit den gleichen Bezugszeichen versehen.

Abweichend führen die beiden Schliessgreifer G1 und G2 jedoch anstelle von je einer bogenförmigen Schliessbewegung mit überlagerter Translations- und Rotationskomponente je zwei gesonderte Schliessbewegungskomponenten aus, nämlich eine geradlinig-translatorische gemäss Pfeil P10 bzw. P20 und eine rotatorische gemäss Pfeil P11 bzw. P21 mit Drehachse jeweils innerhalb des Greiferquerschnitts oder mit geringem Abstand von diesem. Die gegenseitige Annäherung der Greifer G1 und G2 infolge der Translation gemäss P10 und P20 bewirkt in ähnlicher Weise wie zuvor die Bildung einer Schlaufe durch den Folienabschnitt FA, in welche der zu umhüllende Gegenstand G einrückt. Vorteilhafterweise kann dabei unabhängig vom zeitlichen Verhältnis der Bewegungsabläufe keine Ueberschneidung zwischen den beiden Greifern G1, G2 auftreten. Die Rotation gemäss P11 und P21 bewirkt die erforderliche tangentiale Ausrichtung der Endkantenbereiche des Folienabschnitts FA zum Hülsenumfang sowie die gegenseitige Ueberlappung der Endkantenbereiche, wozu wieder für eine geeignete gegenseitige Zeitverschiebung der beiden Rotationen zu sorgen ist. Im übrigen liegt der Vorteil dieser Variante hauptsächlich im einfacheren Aufbau der Bewegungsführungen und Antriebe.

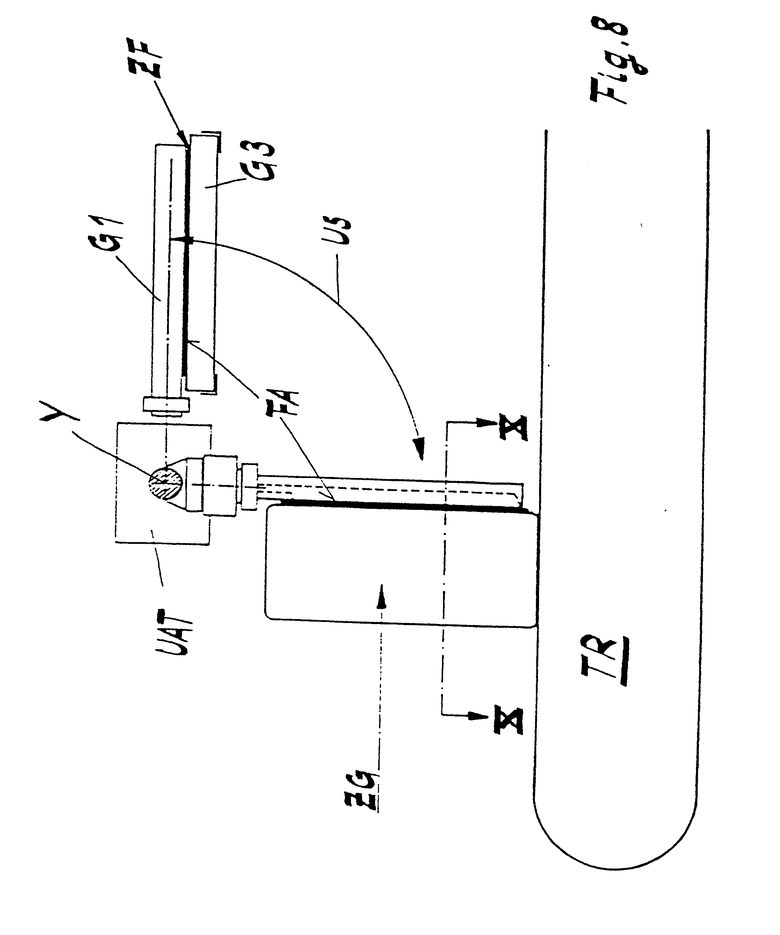

Die im folgenden zu beschreibenden drei Ausführungen gemäss Figuren 8 bis 10 bzw. 11 bzw. 12 unterscheiden sich von den vorangehenden dadurch, dass die Gegenstands-Zuführbahn ZG und die Folien-Zuführbahn ZF in zwei mit beträchtlichem gegenseitigen Abstand angeordneten Ebenen liegen. Dies bedingt zwar einerseits zusätzlichen Bauaufwand für eine Umsetzvorrichtung zur Zusammenführung des hülsenbildenden Folienabschnitts mit dem zu umhüllenden Gegenstand im Bereich der Hülsenschliessvorrichtung, ermöglicht aber andererseits grundsätzlich höhere Arbeitsgeschwindigkeiten, weil die Zeitintervalle mit sich räumlich und zeitlich überschneidenden Bewegungen der Folienzuführung und des Folienabzuges einerseits und des Gegenstandsdurchlaufes andererseits wesentlich vermindert werden können. Die betreffenden Teilarbeitstakte können also in höherem Masse mit zeitlicher Ueberlappung ablaufen und erlauben somit kürzere Gesamt-Taktzeiten.

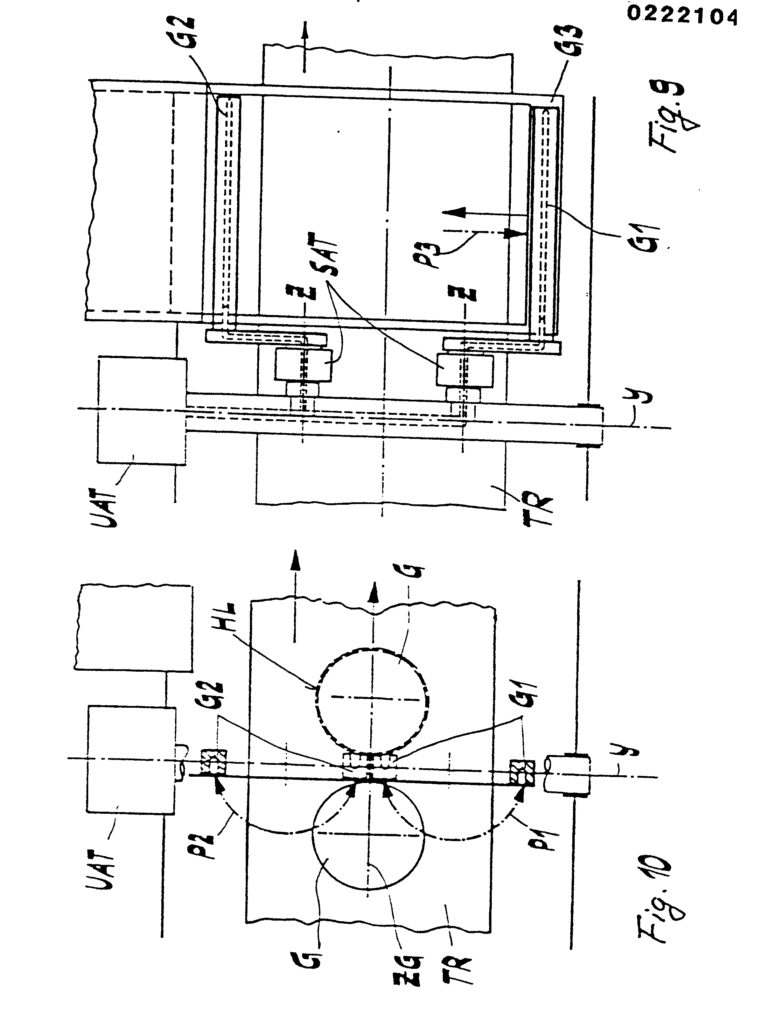

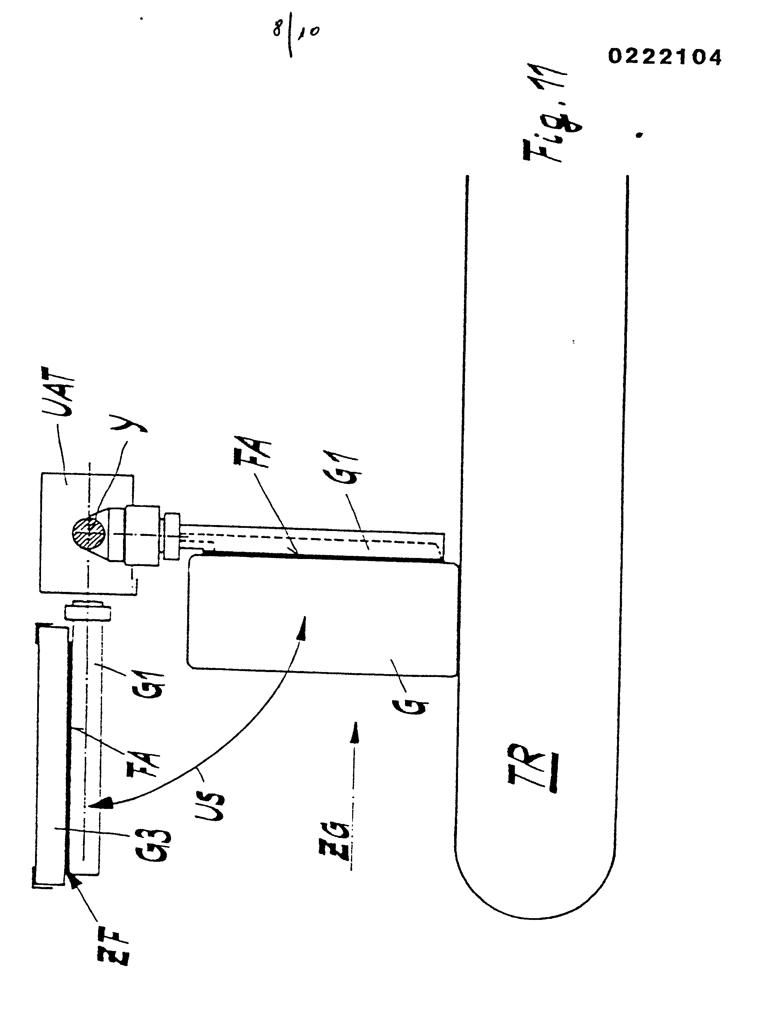

Bei der Ausführung nach Figuren 8 bis 10 erfolgen Folienzuführung sowie Abzug und Abtrennen des Folienabschnitts -
beispielsweise mit grundsätzlich gleichen apparativen Mitteln
wie bei den vorangehenden Ausführungen - mit Bewegungen längs
einer Folien-Zuführbahn ZF, die in einer bezüglich der
Gegenstands-Zuführbahn ZG nach oben versetzten Ebene liegt.
Für den Abzug des Folienabschnitts FA ist ein gemäss Pfeil P3
translatorisch bewegter Sauggreifer G3 unterhalb von ZF
vorgesehen. Die Ueberführung in die Hülsenschliessstellung
erfolgt in einer schwenkenden Umsetzbewegung US um eine
Horizontalachse Y mittels einer Umsetz-Antriebsvorrichtung
UAT, die in der aus Fig. 9 ersichtlichen Weise die Schliessgreifer G1 und G2 mit zugehörigen Schwenkantrieben SAT für
die Schliessbewegungen P1 bzw. P2 trägt. Letztere gelangen
zur Durchführung, wenn die Schliessgreifer mit der Umsetzbewegung US aus ihrer in Fig. 9 sowie in Fig. 8 oben
angedeuteten Folienübernahmestellung in die Hülsenschliessstellung gemäss Fig. 10 bzw. Fig. 8 unten überführt worden
sind. Im übrigen sind Aufbau und Bewegungsabläufe anhand der
mit den vorangehenden Darstellungen sinngemäss übereinstimmenden Bezugszeichen ohne weiteres ersichtlich.

Die Ausführung nach Fig. 11 unterscheidet sich von der vorangehenden durch die Anordnung der Folienzuführung mit Zuführbahn ZF und Abzugsgreifer G3 oberhalb der Folienübernahmestellung der hochgeschwenkten Schliessgreifer G1 und G2. Dies hat die vorteilhafte Folge, dass keine räumliche Ueberschneidung zwischen den Bewegungen der Abzugsbewegung des Greifers G3 einerseits und der Umsetzbewegung US der Schliessgreifer G1, G2 eintreten kann und insoweit eine einfachere Ablaufsteuerung sowie kürzere Teiltaktzeiten erreichbar sind. Andererseits verläuft die Umsetzbewegung US durch den Bewegungsbereich des jeweils in die Folienschlaufe bzw. Hülse einrückenden Gegenstandes, was eventuell geringfügige Verzögerungsintervalle im Gegenstandsvorschub bedingt

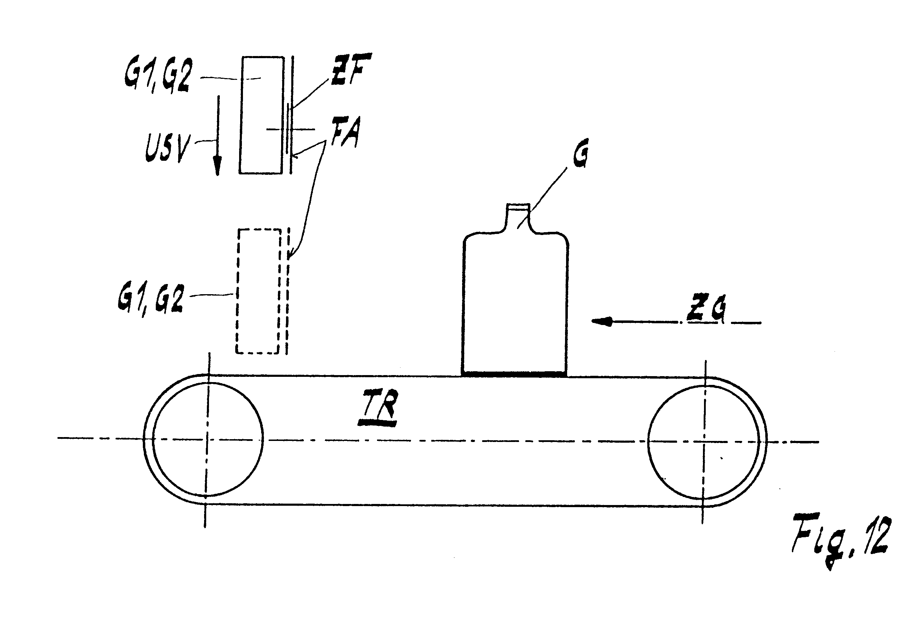

Die Ausführung nach Fig. 12 arbeitet dagegen mit einer einfach translatorischen, vertikalen Umsetzbewegung USV des Folienabschnitts FA aus dem Bereich der Folien-Zuführbahn ZF in denjenigen der Gegenstands-Zuführbahn ZG. Die Umsetzung wird wiederum von den entsprechend abgewandelt gelagerten und angetriebenen Schliessgreifern G1, G2 ausgeführt. Die Einrichtung zeichnet sich durch geringen Platzbedarf der Umsetzvorrichtung und geringe Ueberschneidung mit der Bewegungsbahn der zu umhüllenden Gegenstände aus.

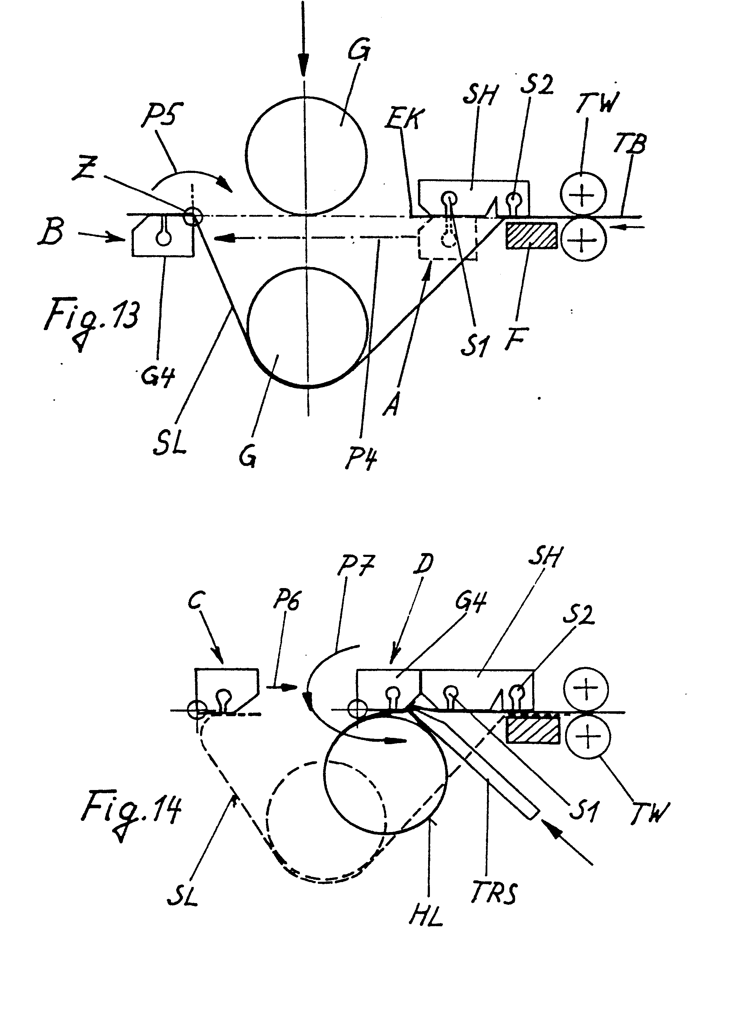

Die Ausführung nach Figuren 13 und 14 zeichnet sich aus durch die Verwendung eines einzigen, in Horizontalrichtung translatorisch sowie um eine Achse Z translatorisch beweglichen und antreibbaren Greifers G4, der sowohl die Abzugs- wie auch

die Hülsenschliessfunktion übernimmt. Die über angetriebene Transportwalzen TW zugeführte Folienbahn FB nimmt zunächst, wie in Fig. 13 strichpunktiert angedeutet, eine Ausgangslage ein, in der die vordere Endkante EK um ein geringes Mass über die linke Endkante eines Saughalters SH vorsteht. Letzterer umfasst zwei getrennt steuerbare Saugstellen S1 und S2. Im Ausgangszustand ist nur die vordere Saugstelle S1 wirksam. Nun übernimmt der in Stellung A befindliche Greifer den Endkantenbereich EK und zieht die Folie mit einer Bewegung gemäss Pfeil P4 aus, bis er seine linke Endstellung B einnimmt. Die Folienbahn wird sodann zwischen der inaktiven Saugstelle S2 und einer Führung F durch die Transportwalzen TW weiter eingeschoben, so dass sich eine Schlaufe SL vorgegebener Länge bildet, in die ein Gegenstand G einrückt. Anschliessend arretiert die Saugstelle S2 das rückwärtige Ende des ausgezogenen Folienabschnitts. Sodann vollzieht der Greifer eine Rotation gemäss Pfeil P5 in seine Stellung C und eine Translation gemäss Pfeil P6 in seine Stellung D. Während der Greifer weiterhin den Endkantenbereich des Folienabschnitts festhält, rückt eine Trennschweissvorrichtung TRS in der aus Fig. 14 ersichtlichen Weise gegen die geneigte, zur Einrückrichtung rechtwinklige Anschlagfläche des Greifers vor, wobei die Schlaufe SL um den Gegenstand G zur Hülse HL gestrafft und der sich an die Hülse nach rückwärts anschliessende Folienbereich von der nunmehr wieder

aktivierten Saugstelle S1 arretiert wird. Sodann stellt die Trennschweissvorrichtung TRS eine Verbindungsnaht zwischen dem Bereich kurz hinter der Folienendkante EK und dem gegenüberliegenden Folienbereich her, womit die Hülse fest geschlossen ist, und trennt gleichzeitig die Hülse mit Gegenstand von der nun wieder über die linke Endkante dem Saughalters SH vorstehenden Folienbereich ab. Mit einer abschliessenden Rotation gemäss Pfeil P7 gelangt der Greifer G4 wieder in seine Ausgangslage A (siehe Fig. 13) unterhalb des Saughalters SH. Mit Inaktivierung der Saugstelle S2 ist der Ausgangszustand der Einrichtung wieder erreicht.

A n s p r ü c h e

1. Verfahren zur Herstellung von Folienhülsen, insbesondere aus unter Wärmewirkung schrumpfungsfähigen Folien, für die Ummantelung von Flaschen, Büchsen und dergl. oder von Gruppen solcher Gegenstände, dadurch gekennzeichnet dass ein dem vorgegebenen Hülsenumfang entsprechender Folienabschnitt von einer Vorratsstation abgezogen und ein erster, freier Endkantenbereich dieses Folienabschnitts zur Bildung einer geschlossenen Hülse mit einem zweiten, entgegengesetzten Endkantenbereich zusammengeführt sowie mit diesem stoffschlüssig verbunden wird.

2. Verfahren nach Anspruch 1, dadurch gekennzeichnet, dass die Endkantenbereiche des Folienabschnitts durch eine Schliessbewegung mit Rotationskomponente in eine bezüglich des Hülsenumfanges tangentiale Schliesslage mit gegenseitiger Ueberlappung zusammengeführt werden.

3. Verfahren nach Anspruch 1 oder 2, dadurch gekennzeichnet, dass das Zusammenführen und Verbinden der Endkantenbereiche bei mit einer Vorrats-Folienbahn zusammenhängendem zweiten Endkantenbereich durchgeführt und die so gebildete Hülse durch Abtrennen des zweiten Endkantenbereiches von der Vorrats-Folienbahn freisetzt wird.

4. Verfahren nach einem der vorangehenden Ansprüche, dadurch gekennzeichnet, dass die Endkantenbereiche des Folienabschnitts mit einer einen zu umhüllenden Gegenstand umgreifenden Schliessbewegung zusammengeführt werden.

5. Verfahren nach Anspruch 4, dadurch gekennzeichnet, dass jeweils ein zu umhüllender Gegenstand vor Abschluss der Schliessbewegung der Folien-Endkantenbereiche mit einer Zuführbewegung in den eine Schlaufenform einnehmenden Folienabschnitt, vorzugsweise unter Straffung desselben, eingebracht wird.

6. Verfahren nach einem der vorangehenden Ansprüche, dadurch gekennzeichnet, dass einer der Endkantenbereiche mit einem über den Hülsenumfang frei vorstehenden Endabschnitt versehen wird.

7. Verfahren zur Herstellung von Hülsen aus unter Wärmewirkung schrumpfungsfähigen Folien, vorzugsweise für die Ummantelung von Flaschen, Büchsen und dergl. oder von Gruppen solcher Gegenstände, insbesondere nach einem der vorangehenden Ansprüche, gekennzeichnet durch die Anwendung von im wesentlichen nur in Bahnlängsrichtung vorgerecktem Folienmaterial.

0222104

8. Verfahren nach einem der vorangehenden Ansprüche, dadurch gekennzeichnet, dass der Schlaufeninnenraum zur Herstellung von Leerhülsen freigehalten wird.

9. Verfahren nach einem der vorangehenden Ansprüche, dadurch gekennzeichnet, dass die Folienhülse mit einem Reissband versehen wird.

10. Verfahren nach Anspruch 8, dadurch gekennzeichnet, dass das Reissband durch zur Hülsenachse parallele Perforationen der Folie gebildet wird.

11. Verfahren nach einem der vorangehenden Ansprüche, dadurch gekennzeichnet, dass in der Hülse eine Sollbruchstelle in Form einer einfachen Perforation angebracht wird.

12. Einrichtung zur Durchführung des Verfahrens nach einem der vorangehenden Ansprüche, gekennzeichnet durch folgende Merkmale:

    a) Es ist eine Folienbahn-Zuführvorrichtung mit nachgeordneter Abzugs- und Schliessvorrichtung für die Bereitstellung eines Folienabschnitts vorgegebener Länge und das Zusammenführen der Folien-Endkantenbereiche zu einer geschlossenen Hülse vorgesehen;

    b) die Abzugs- und Schliessvorrichtung umfasst mindestens einen in Wirkverbindung mit einem Folien-Endkantenbereich tretenden Greifer mit einer der

Folienabzugs- bzw. Hülsenschliessbewegung entsprechenden Bewegungsführung und Antriebsvorrichtung;

c) es ist eine Verbindungsvorrichtung für die Herstellung einer stoffschlüssigen Naht zwischen den Folien-Endkantenbereichen und eine Trennvorrichtung für das Ablängen des hülsenbildenden Folienabschnitts bzw. für die Freisetzung der gebildeten Hülse vorgesehen.

13. Einrichtung nach Anspruch 12, dadurch gekennzeichnet, dass zwei mit je einem freien Endkantenbereich eines Folienabschnitts in Wirkverbindung tretende Schliessgreifer vorgesehen sind, die zueinander gegensinnige, eine Rotationskomponente enthaltende Schliessbewegungen zur Schlaufen- und Hülsenbildung sowie entsprechend gegensinnige Rückstellbewegungen ausführen.

14. Einrichtung nach Anspruch 12 oder 13, dadurch gekennzeichnet, dass ein mit einem freien Folien-Endkantenbereich in Wirkverbindung tretender Greifer vorgesehen ist, der eine translatorische Abzugsbewegung gemäss der vorgegebenen Länge eines Folienabschnitts sowie eine entsprechend gegensinnige Rückstellbewegung ausführt.

15. Einrichtung nach Anspruch 14, dadurch gekennzeichnet, dass ein Abzugs- und Schliessgreifer vorgesehen ist, der im Anschluss an die translatorische Abzugsbewegung eine gegensinnige Schliessbewegung mit mindestens einer Rotationskomponente sowie entsprechende Rückstellbewegungen ausführt.

5. Einrichtung nach einem der Ansprüche 12 bis 15, dadurch gekennzeichnet, dass der Abzugs- und Schliessvorrichtung eine Gegenstands-Zuführvorrichtung für zu umhüllende Gegenstände vorgeschaltet ist.

7. Einrichtung nach Anspruch 16, dadurch gekennzeichnet, dass die Folien-Zuführvorrichtung und die Gegenstands-Zuführvorrichtung wenigstens annähernd in einer zur Folien-Zuführebene rechtwinkligen Ebene liegende sowie unter einem vorzugsweise rechten Winkel zueinander verlaufende Zuführbahnen aufweisen und dass die Uebergabestelle der Folien-Zuführvorrichtung zur anschliessenden Hülsenbildung im Schnittbereich der beiden Zuführbahnen angeordnet ist.

18. Einrichtung nach Anspruch 16, dadurch gekennzeichnet, dass die Folien-Zuführvorrichtung und die Gegenstands-Zuführvorrichtung sich mit gegenseitigem Abstand kreuzende Zuführbahnen aufweisen und dass zwischen diesen eine Umsetzvorrichtung mit rotatorischer Arbeitsbewegung um eine im wesentlichen parallel zur Folien-Zuführebene angeordnete Drehachse oder mit translatorischer, im wesentlichen parallel zur Folien-Zuführebene verlaufender Arbeitsbewegung angeordnet ist.

Fig. 2

Fig. 1

1/10

0222104

Fig. 3

e)

d)

16  19

28

15

c)

20

28

28

b)

19  16

26'

a)

28  19  16

15  20

## Fig. 5

25 — 30 — 29

26 — 30 — 29

## Fig. 4

25 — 30 — 29

29 — 30 — 26

Fig. 6

4/10

0222104

Fig.7

Fig. 8

Fig. 10

Fig. 9

UAT

P2
G2
HL

G
ZG
TR

G1
P1

y

UAT

G2

Z
SAT

P3
Z

TR

y

G1
G3

7/10

0222104

0222104

Fig. 11

G1, G2   ZF

USV   FA

G1, G2

G

ZG

TR

9/10

Fig. 12

02221

Fig.13

Fig.14

0222104